# EUROPEAN PATENT APPLICATION

(11) **EP 4 848 032 A1**
(43) Date of publication of application: **02.12.2026**
(21) Application number: 26168189.4
(22) Date of filing: 26.03.2026
(51) Int. Cl.: G06F 1/16, A45C 11/00, H05K 5/02, H05K 5/10

(54) **PROTECTIVE CASE FOR ELECTRONIC DEVICE**

(30) Priority: 29.05.2025 CN 202521084391 U
(71) Applicant: Shenzhen DeOne Innovation Technology Co., Ltd, Shenzhen, Guangdong 518000 (CN)
(72) Inventor: YU, Lei, Shenzhen, 518000 (CN); XIE, Huayong, Shenzhen, 518000 (CN); HE, Beijing, Shenzhen, 518000 (CN)
(74) Representative: Metida

(57) **Abstract**

A protective case for an electronic device includes a front cover and a rear shell. The front cover cooperates with the rear shell to form a cavity for accommodating the electronic device. One end of the front cover is provided with a snap-connection portion configured to be snap-connected to the rear shell. Another end of the front cover is rotatably connected with a connecting portion detachably connected to the rear shell.

## Description

### TECHNICAL FIELD

The present application relates to the technical field of electronic device protective cases, and in particular, to a protective case for an electronic device.

### BACKGROUND

A gaming device on the market includes a display screen and control handles, with a control circuit board and battery inside the device. Such gaming device is prone to damage when dropped, so they are often wrapped in a protective case for an electronic device.

A protective case for an electronic device generally includes a rear shell that covers the rear and sides of the gaming device, and a front cover that covers the front of the gaming device. In a typical protective case for an electronic device, one end of the front cover is rotatably connected to the rear shell, while the other end of the front cover is snap-connected to the rear shell.

When using a snap connection structure, the connecting parts often become worn after repeated use, leading to reduced connection stability between the front cover and the rear shell. In some cases, the front cover and rear shell may even fail to assemble, compromising the protective capability for the gaming device. Therefore, there is an urgent need for a connection method that allows for repeated use and is not prone to wear to connect the front cover and the rear shell.

### SUMMARY

In order to solve shortcomings in existing technologies, the present application is to provide a protective case for an electronic device. The protective case for the electronic device is snap-connected to one end of the front cover and the rear shell via the snap-connection portion, and the other end of the front cover is rotatably provided with a connecting portion that is detachably connected to the rear shell. During use, the connecting portion is firstly detached from the rear shell and rotated in a direction away from the rear shell, so as to pull out the rear shell in a direction from the snap-connection portion towards the connecting portion, thereby disengaging the snap-connection portion from the rear shell. This disengagement method prevents damage to the snap-connection portion while increasing the service life of the protective case.

A protective case for an electronic device is provided. The protective case for the electronic device includes a front cover and a rear shell. The front cover cooperates with the rear shell to form a cavity for accommodating the electronic device. One end of the front cover is provided with a snap-connection portion configured to be snap-connected with the rear shell. Another end of the front cover is rotatably connected with a connecting portion detachably connected to the rear shell.

After adopting the above technical solution, the beneficial effects of the present application are as follows: by snap-connected to one end of the front cover and the rear shell via the snap-connection portion, and rotatably providing the connecting portion at the other end of the front cover, the connecting portion is detachably connected to the rear shell. During use, the connecting portion is firstly detached from the rear shell and rotated in a direction away from the rear shell, so as to pull out the rear shell in the direction from the snap-connection portion towards the connecting portion, thereby disengaging the snap-connection portion from the rear shell. This disengagement method prevents damage to the snap-connection portion while increasing the service life of the protective case.

### BRIEF DESCRIPTION OF THE DRAWINGS

In order to more clearly illustrate technical solutions in embodiments of the present application or in the prior art, drawings required for describing the embodiments or the prior art will be briefly introduced below. Obviously, the drawings in the following description are merely some embodiments of the present application. For those of ordinary skilled in the art, other drawings may be derived from these drawings without creative effort.
FIG. 1 is a schematic structural view of a protective case for an electronic device in an assembled state according to an embodiment of the present application.
FIG. 2 is a schematic structural view of the protective case for the electronic device in an unfolded state according to an embodiment of the present application.
FIG. 3 is an exploded schematic view of the protective case for the electronic device according to an embodiment of the present application.
FIG. 4 is an exploded schematic view of a front cover according to an embodiment of the present application.
FIG. 5 is a schematic structural view of a fixing member according to an embodiment of the present application.
FIG. 6 is an exploded schematic view of a rear shell according to an embodiment of the present application.
FIG. 7 is an exploded schematic view of the rear shell from another perspective according to an embodiment of the present application.
FIG. 8 is a cross-sectional view taken along line A-A' of FIG. 1.

### Reference Numerals:

100, Protective case for an electronic device; 10, Front cover; 11, Snap-connection portion; 12, Connecting portion; 121, First magnetic member; 122, First magnetic mating member; 123, Fixing member; 1231, First groove; 1232, Second groove; 1233, First through hole; 1234, First groove surface; 1235, Second groove surface; 124, Positioning post; 13, First flexible layer; 14, Hard layer; 15, Second flexible layer; 20, Rear shell; 21, Fixing portion; 211, Third groove; 212, Fourth groove; 213, Second through hole; 214, Third groove surface; 215, Fourth groove surface; 22, Second magnetic member; 23, Second magnetic mating member; 24, Positioning hole; 25, Limiting protrusion; 26, Locking hole; 27, Decorative piece.

### DETAILED DESCRIPTION OF THE EMBODIMENTS

The following provides a further detailed description of the present application in conjunction with the accompanying drawings.

The embodiments are merely an illustration of the present application and is not to be construed as limiting it. Upon reading this specification, those skilled in the art may make noncreative modifications to the embodiments as needed, provided that all such modifications falling within the scope of the claims of the present application are protected by the Patent Law.

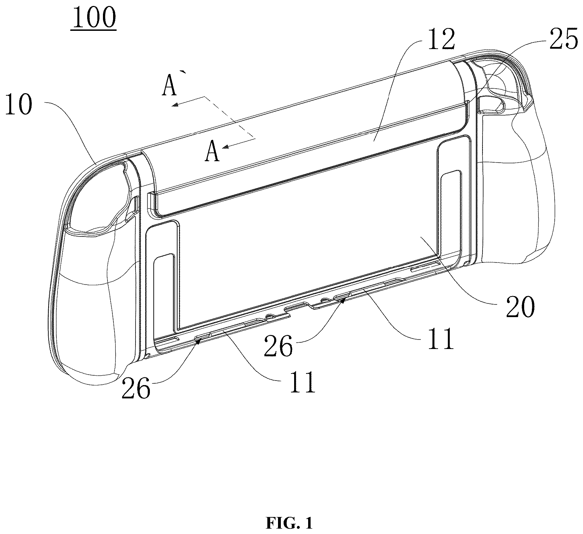

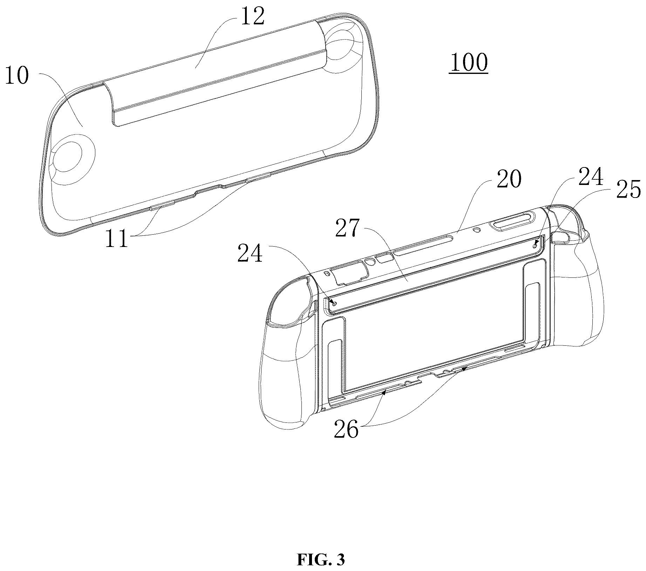

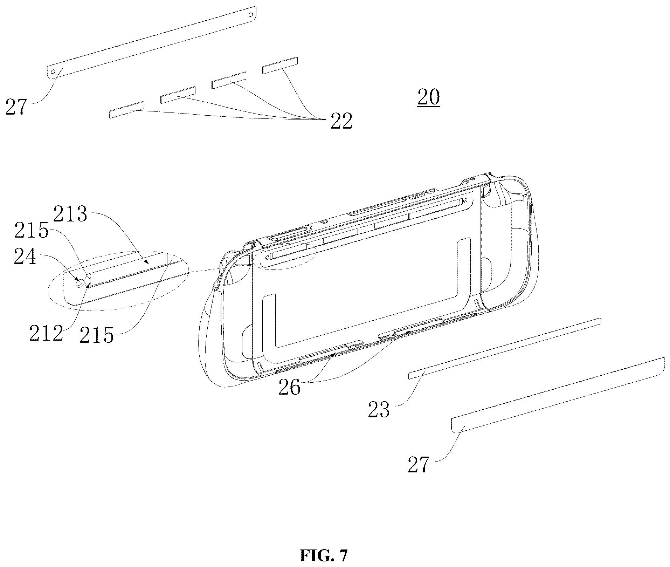

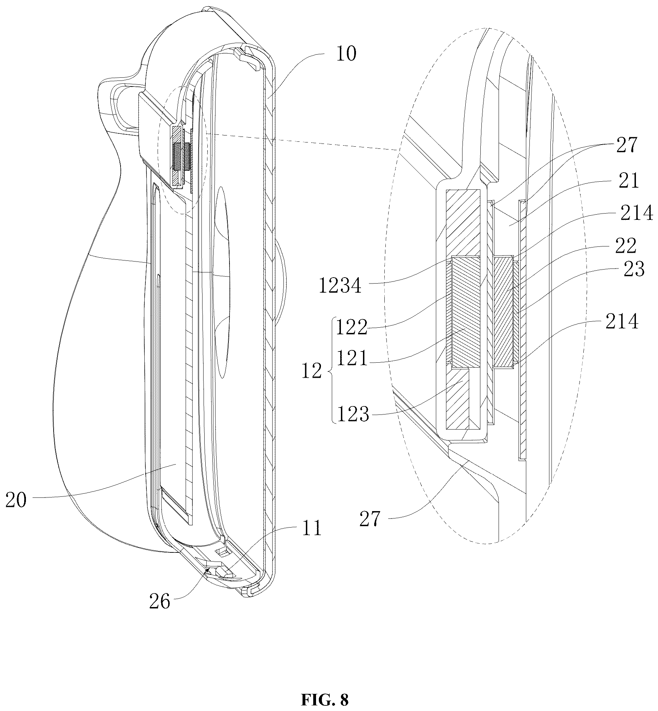

As shown in FIGS. 1-4 and FIGS. 6-8, an embodiment of the present application provides a protective case for an electronic device 100 including a front cover 10 and a rear shell 20. The front cover 10 cooperates with the rear shell 20 to define a cavity for accommodating an electronic device, thereby protecting the electronic device. In this embodiment, the electronic device is a gaming device. In other embodiments, the electronic device can be an electronic device such as a mobile phone or a computer.

One end of the front cover 10 is provided with a snap-connection portion 11, which is snap-connected to the rear shell 20. The other end of the front cover 10 is rotatably connected with a connecting portion 12, and the connecting portion 12 is detachably connected to the rear shell 20.

In the assembled state, the snap-connection portion 11 is snap-connected to the rear shell 20, and the connecting portion 12 is connected to the rear shell 20.

In the unfolded state, the connecting portion 12 is separated from the rear shell 20, and the connecting portion 12 is rotated in a direction away from the rear shell 20, so that the rear shell 20 can be pulled out in a direction from the snap-connection portion 11 towards the connecting portion 12, thereby detaching the snap-connection portion 11 from the rear shell 20. This detachment method prevents damage to the snap-connection portion 11 while increasing the service life of the protective case.

In this embodiment, the bottom of the rear shell 20 is provided with a locking hole 26 or a locking groove, which is used for snap-connection with the snap-connection portion 11 of the front cover 10. The top of the front cover 10 is rotatably connected to the connecting portion 12. The snap-connection portion 11 extends at least partially in a direction from the front cover 10 towards the rear shell 20, and the end of the snap-connection 11 away from the front cover 10 extends at least partially in the direction from the snap-connection portion 11 towards the connecting portion 12, so as to form the snap-connection portion 11.

In other embodiments, the locking hole 26 of the rear shell 20 is provided on one side, and the other side or the back surface of the rear shell 20 is detachably connected to the connecting portion 12 rotatably provided on the top of the front cover 10.

In other embodiments, the snap-connection portion 11 snap-connects to the back surface of the rear shell 20.

As shown in FIGS. 1-3, the connecting portion 12 connects to the side of the rear shell 20 facing away from the front cover 10, i.e., connects to the back surface of the rear shell 20. By connecting the connecting portion 12 to the back surface of the rear shell 20, and through the rotational connection structure of the front cover 10 around the end of the rear shell 20 away from the snap-connection portion 11, a tensile force is provided for the front cover 10 in the direction from the snap-connection portion 11 towards the connecting portion 12, further enhancing stability of the snap connection between the snap-connection portion 11 and the rear shell 20.

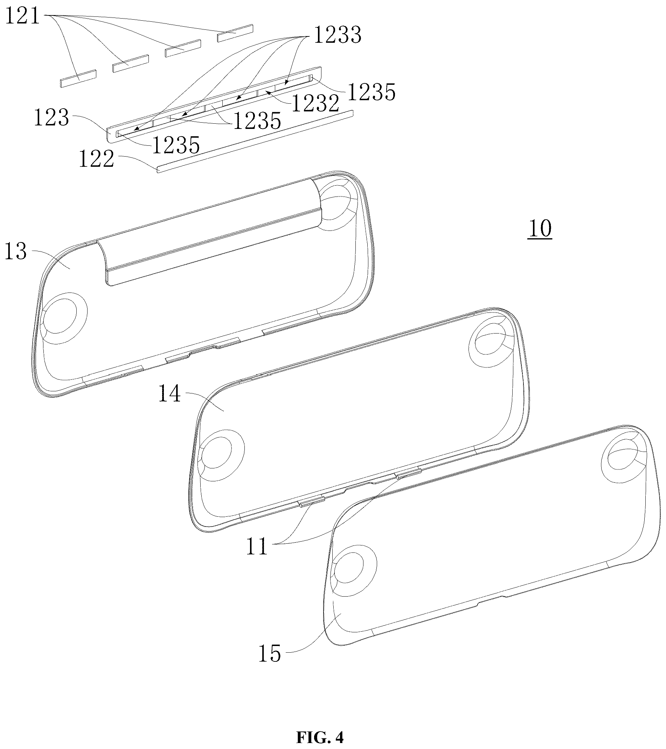

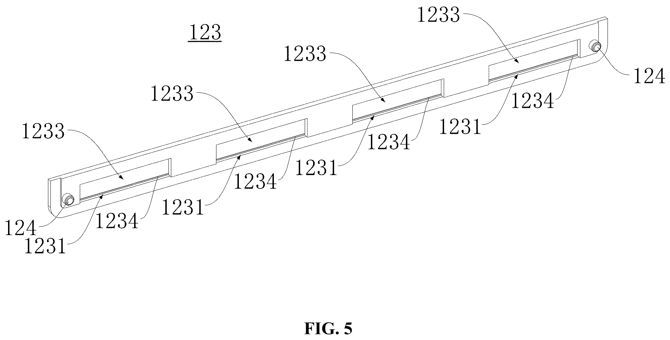

As shown in FIGS. 4-7, the connecting portion 12 is magnetically connected to the rear shell 20 to avoid wear on the connecting portion 12 caused by repeated detachment of the connecting portion 12 from the rear shell 20, thereby ensuring the connection stability of the connecting portion 12 and the rear shell 20 after multiple detachments.

In other embodiments, the connecting portion 12 is one of a suction cup, hook and loop type fasteners such as Velcro^{®}, and an adhesive member.

As shown in FIGS. 4-8, the connecting portion 12 is provided with a first magnetic member 121, and the rear shell 20 is provided with a second magnetic member 22. The first magnetic member 121 and the second magnetic member 22 attract each other to magnetically connect the connecting portion 12 and the rear shell 20.

In a second embodiment, the connecting portion 12 is provided with a first magnetic mating member 122, and the rear shell 20 is provided with a second magnetic member 22. The first magnetic mating member 122 and the second magnetic member 22 attract each other to magnetically connect the connecting portion 12 and the rear shell 20.

In a third embodiment, the connecting portion 12 is provided with a first magnetic member 121, and the rear shell 20 is provided with a second magnetic mating member 23. The first magnetic member 121 and the second magnetic mating member 23 attract each other to magnetically connect the connecting portion 12 and the rear shell 20.

As shown in FIGS. 4-5 and 8, the connecting portion 12 is provided with a fixing member 123. Two opposite sides of the fixing member 123 are respectively provided with a first groove 1231 and a second groove 1232. The first groove 1231 is configured to allow the first magnetic member 121 to be embedded therein, and the second groove 1232 is configured to allow the first magnetic mating member 122 to be embedded therein. The bottom surface of the first groove 1231 and the bottom surface of the second groove 1232 are coplanar. A first through hole 1233 communicated with the first groove 1231 and the second groove 1232 is provided. The first magnetic member 121 and the first magnetic mating member 122 attract each other and are in contact.

In this embodiment, the dimension of the first groove 1231 in the vertical direction is larger than the dimension of the second groove 1232 in the vertical direction, so as to form first groove surfaces 1234 at two opposite ends of the first groove 1231 in the vertical direction. The first groove surfaces 1234 are configured to abut against the first magnetic member 121. The dimension of the second groove 1232 in the transverse direction is larger than the dimension of the first groove 1231 in the transverse direction, so as to form second groove surfaces 1235 in the transverse direction. The second groove surfaces 1235 are configured to abut against the first magnetic mating member 122. Since the bottom surface of the first groove 1231 and the bottom surface of the second groove 1232 are coplanar, the first through hole 1233 is formed. When the first magnetic member 121 is embedded in the first groove 1231 and the first magnetic mating member 122 is embedded in the second groove 1232, the first magnetic member 121 is at least partially located within the first through hole 1233, the first magnetic mating member 122 is at least partially located within the first through hole 1233, and the first magnetic member 121 and the first magnetic mating member 122 attract each other and are in contact.

In other embodiments, the dimension of the first groove 1231 in the transverse direction is larger than the dimension of the second groove 1232 in the transverse direction, so as to form first groove surfaces 1234 at two opposite ends of the first groove 1231 in the transverse direction. The first groove surfaces 1234 are configured to abut against the first magnetic member 121. The dimension of the second groove 1232 in the vertical direction is larger than the dimension of the first groove 1231 in the vertical direction, so as to form second groove surfaces 1235 in the vertical direction. The second groove surfaces 1235 are configured to abut against the first magnetic mating member 122.

As shown in FIGS. 4-5 and 8, the fixing member 123 is provided with at least two first grooves 1231. The at least two first grooves 1231 are respectively embedded with at least two first magnetic members 121. The at least two first magnetic members 121 together attract the first magnetic mating member 122, thereby increasing magnetic attraction capability of the connecting portion 12.

In this embodiment, the fixing member 123 is provided with four first grooves 1231, and a corresponding one of four first magnetic members 121 is embedded in each first groove 1231. The dimension of the second groove 1232 in the transverse direction is larger than the sum of the dimensions of the four first grooves 1231 in the transverse direction, so that the four first magnetic members 121 together attract the same first magnetic mating member 122, further increasing the magnetic attraction capability of the connecting portion 12.

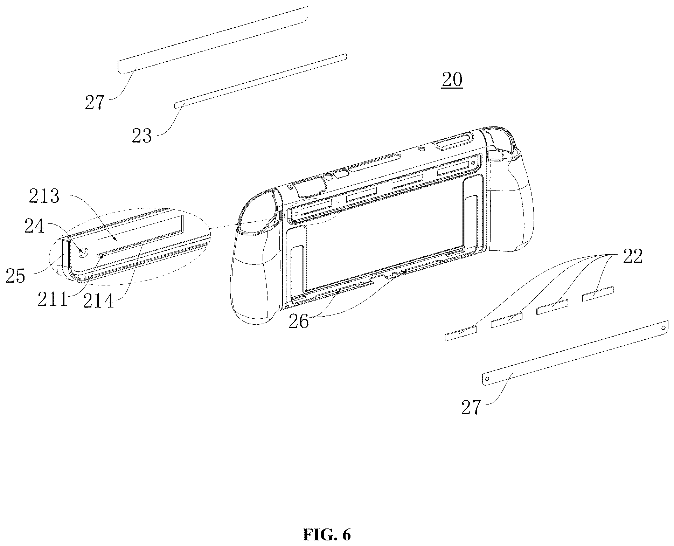

As shown in FIGS. 6-8, the rear shell 20 is provided with a fixing portion 21. Two opposite sides of the fixing portion 21 are respectively provided with a third groove 211 and a fourth groove 212. The third groove 211 is configured to allow the second magnetic member 22 to be embedded therein, and the fourth groove 212 is configured to allow the second magnetic mating member 23 to be embedded therein. The bottom surface of the third groove 211 and the bottom surface of the fourth groove 212 are coplanar, and a second through hole 213 communicated with the third groove 211 and the fourth groove 212 is provided. The second magnetic member 22 and the second magnetic mating member 23 attract each other and are in contact.

In this embodiment, the dimension of the third groove 211 in the vertical direction is larger than the dimension of the fourth groove 212 in the vertical direction, so as to form third groove surfaces 214 at two opposite ends of the third groove 211 in the vertical direction. The third groove surfaces 214 are configured to abut against the second magnetic member 22. The dimension of the fourth groove 212 in the transverse direction is larger than the dimension of the third groove 211 in the transverse direction, so as to form fourth groove surfaces 215 in the transverse direction. The fourth groove surfaces 215 are configured to abut against the second magnetic mating member 23. Since the bottom surface of the third groove 211 and the bottom surface of the fourth groove 212 are coplanar, the second through hole 213 is formed. When the second magnetic member 22 is embedded in the third groove 211 and the second magnetic mating member 23 is embedded in the fourth groove 212, the second magnetic member 22 is at least partially located within the second through hole 213, the second magnetic mating member 23 is at least partially located within the second through hole 213, and the second magnetic member 22 and the second magnetic mating member 23 attract each other and are in contact.

In other embodiments, the dimension of the third groove 211 in the transverse direction is larger than the dimension of the fourth groove 212 in the transverse direction, so as to form third groove surfaces 214 at two opposite ends of the third groove 211 in the transverse direction. The third groove surfaces 214 are configured to abut against the second magnetic member 22. The dimension of the fourth groove 212 in the vertical direction is larger than the dimension of the third groove 211 in the vertical direction, so as to form fourth groove surfaces 215 in the vertical direction. The fourth groove surfaces 215 are configured to abut against the second magnetic mating member 23.

As shown in FIGS. 6-8, the fixing portion 21 is provided with at least two third grooves 211. The at least two third grooves 211 are respectively embedded with at least two second magnetic members 22. The at least two second magnetic members 22 together attract the second magnetic mating member 23, thereby increasing the magnetic attraction capability of the rear shell 20.

In this embodiment, the fixing portion 21 is provided with four third grooves 211, and a corresponding one of four second magnetic members 22 is embedded in each third groove 211. The dimension of the fourth groove 212 in the transverse direction is larger than the sum of the dimensions of the four third grooves 211 in the transverse direction, so that the four second magnetic members 22 together attract the same second magnetic mating member 23, further increasing the magnetic attraction capability of the rear shell 20.

Specifically, in the assembled state, the side of the fixing portion 21 provided with the second magnetic member 22 is adjacent to the connecting portion 12, and the side of the connecting portion 12 provided with the first magnetic member 121 is adjacent to the fixing portion 21.

Specifically, the side of the fixing portion 21 provided with the third groove 211 is covered with a first decorative piece 27, and the side of the fixing portion 21 provided with the fourth groove 212 is covered with a second decorative piece 27.

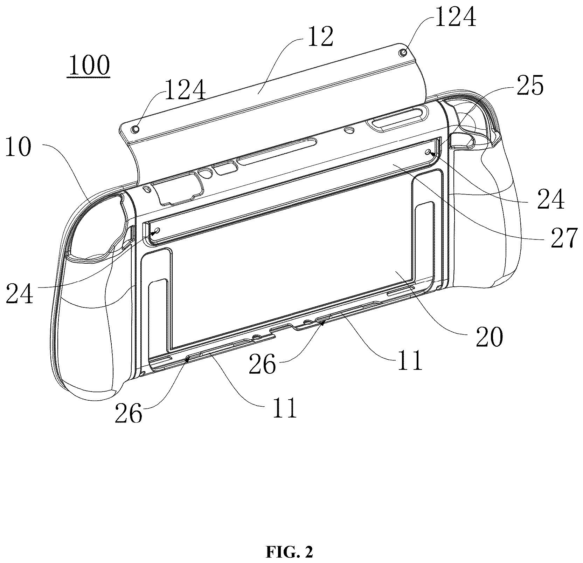

As shown in FIGS. 2 and 5-7, the fixing member 123 is provided with a positioning post 124, and the fixing portion 21 is provided with a positioning hole 24. In the assembled state, the positioning post 124 is embedded in the positioning hole 24 to position the connecting portion 12.

In other embodiments, the fixing portion 21 is provided with a positioning post 124, and the fixing member 123 is provided with a positioning hole 24. In the assembled state, the positioning post 124 is embedded in the positioning hole 24 to position the connecting portion 12.

As shown in FIGS. 1-3, 6 and 8, the edge of the fixing portion 21 is provided with a limiting protrusion 25. The limiting protrusion 25 is U-shaped. The limiting protrusion 25 is configured to limit displacement of the connecting portion 12 in the transverse direction, while positioning the connecting portion 12 in the vertical direction.

As shown in FIG. 4, the front cover 10 includes a first flexible layer 13 and a hard layer 14. The snap-connection portion 11 is arranged on the hard layer 14 to ensure the mechanical strength required for the snap connection between the front cover 10 and the rear shell 20. The connecting portion 12 is connected to the first flexible layer 13, so that the connecting portion 12 is rotatably connected to the first flexible layer 13. The first flexible layer 13 is arranged on a side of the hard layer 14 facing away from the rear shell 20, and the hard layer 14 is adjacent to the rear shell 20, thereby ensuring that when the connecting portion 12 is detachably connected to the rear shell 20, the first flexible layer 13 provides an upward force partially directed towards the rear shell 20 to the hard layer 14, ensuring the connection stability between the front cover 10 and the rear shell 20.

If the first flexible layer 13 were adjacent to the rear shell 20 and the hard layer 14 were arranged on a side of the first flexible layer 13 facing away from the rear shell 20, when the connecting portion 12 is detachably connected to the rear shell 20, the first flexible layer 13 might exert an upward force partially directed away from the rear shell 20 to the hard layer 14, which may cause the hard layer 14 to detach and separate from the first flexible layer 13, reducing the service life of the front cover 10 and decreasing the stability between the front cover 10 and the rear shell 20.

As shown in FIG. 4, the front cover 10 further includes a second flexible layer 15. The second flexible layer 15 is arranged on the side of the hard layer 14 facing away from the first flexible layer 13. The arrangement of the second flexible layer 15 prevents the hard layer 14 from directly contacting the electronic device, avoiding damage or scratching of the electronic device caused by collision or contact with the hard layer 14.

In this embodiment, the first flexible layer 13 is leather, the hard layer 14 is a plastic part, and the second flexible layer 15 is cloth.

In other embodiments, the first flexible layer 13 is cloth or other flexible material. The hard layer 14 is a metal material. The second flexible layer 15 is leather or other flexible material.

## Claims

1. A protective case (100) for an electronic device, comprising a front cover (10) and a rear shell (20), wherein the front cover (10) cooperates with the rear shell (20) to form a cavity for accommodating the electronic device,
the protective case is **characterized in that**, one end of the front cover (10) is provided with a snap-connection portion (11), the snap-connection portion (11) is configured to be snap-connected to the rear shell (20), and another end of the front cover (10) is rotatably connected with a connecting portion (12), the connecting portion (12) being detachably connected to the rear shell (20).

2. The protective case (100) for the electronic device according to claim 1, **characterized in that** the connecting portion (12) is connected to a side of the rear shell (20) facing away from the front cover (10).

3. The protective case (100) for the electronic device according to claim 1, **characterized in that** the connecting portion (12) is magnetically connected to the rear shell (20).

4. The protective case (100) for the electronic device according to claim 3, **characterized in that** the connecting portion (12) is provided with at least one first magnetic member (121), and the rear shell (20) is provided with at least one second magnetic member (22) configured to magnetically attract the at least one first magnetic member (121) so as to magnetically connect the connecting portion (12) and the rear shell (20).

5. The protective case (100) for the electronic device according to claim 4, **characterized in that** the connecting portion (12) is provided with a fixing member (123); two opposite sides of the fixing member (123) are respectively provided with at least one first groove (1231) and a second groove (1232); the at least one first groove (1231) is configured to respectively receive the at least one first magnetic member (121), the second groove (1232) is configured to receive a first magnetic mating member (122); a bottom surface of the at least one first groove (1231) and a bottom surface of the second groove (1232) are coplanar; and a first through hole (1233) is communicated with the at least one first groove (1231) and the second groove (1232), and the at least one first magnetic member (121) and the first magnetic mating member (122) attract and are in contact with each other.

6. The protective case (100) for the electronic device according to claim 5, **characterized in that** the number of the at least one first groove (1231) is at least two, and the number of the at least one first magnetic member (121) is at least two, the at least two first grooves (1231) are configured to respectively receive the at least two first magnetic members (121), and the at least two first magnetic members (121) together attract the first magnetic mating member (122).

7. The protective case (100) for the electronic device according to claim 6, **characterized in that** the rear shell (20) is provided with a fixing portion (21); two opposite sides of the fixing portion (21) are respectively provided with at least one third groove (211) and a fourth groove (212); each of the at least one third groove (211) is configured to receive a corresponding one of the at least one second magnetic member (22), the fourth groove (212) is configured to receive a second magnetic mating member (23); a bottom surface of the third groove (211) and a bottom surface of the fourth groove (212) are provided with a second through hole (213) communicated with the third groove (211) and the fourth groove (212), and the second magnetic member (22) and the second magnetic mating member (23) attract and in contact with each other.

8. The protective case (100) for the electronic device according to claim 7, **characterized in that** the fixing member (123) is provided with a positioning post (124), the fixing portion (21) is provided with a positioning hole (24), and in an assembled state, the positioning post (124) is embedded in the positioning hole (24) to position the connecting portion (12).

9. The protective case (100) for an electronic device according to claim 7, **characterized in that** the fixing portion (21) is provided with a positioning post (124), and the fixing member (123) is provided with a positioning hole (24); and in an assembled state, the positioning post (124) is embedded in the positioning hole (24) to position the connecting portion (12).

10. The protective case (100) for the electronic device according to claim 7, **characterized in that** a dimension of the third groove (211) in a vertical direction is larger than that of the fourth groove (212) in the vertical direction, so as to form third groove surfaces (214) at two opposite ends of the third groove (211) in the vertical direction; the third groove surfaces (214) are configured to abut against the second magnetic member (22); a dimension of the fourth groove (212) in a transverse direction is larger than that of the third groove (211) in the transverse direction, so as to form fourth groove surfaces (215) in the transverse direction; and the fourth groove surfaces (215) are configured to abut against the second magnetic mating member (23); the bottom surface of the third groove (211) and the bottom surface of the fourth groove (212) are provided with a second through hole (213) communicated with the third groove (211) and the fourth groove (212), and the second magnetic member (22) and the second magnetic mating member (23) attract and in contact with each other.

11. The protective case (100) for the electronic device according to claim 7, **characterized in that** a dimension of the third groove (211) in a transverse direction is larger than that of the fourth groove (212) in the transverse direction, so as to form third groove surfaces (214) at two opposite ends of the third groove (211) in the transverse direction; the third groove surfaces (214) are configured to abut against the second magnetic member (22); a dimension of the fourth groove (212) in a vertical direction is larger than that of the third groove (211) in the vertical direction, so as to form fourth groove surfaces (215) in the vertical direction; and the fourth groove surfaces (215) are configured to abut against the second magnetic mating member (23).

12. The protective case (100) for the electronic device according to claim 7, **characterized in that** the number of the at least one third grooves (211) is at least two, and the number of the at least one second magnetic member (22) is at least two; at least two third grooves (211) are respectively embedded with at least two second magnetic members (22); the at least two second magnetic members (22) together attract the second magnetic mating member (23).

13. The protective case (100) for the electronic device according to claim 7, **characterized in that** an edge of the fixing portion (21) is provided with a limiting protrusion (25); the limiting protrusion (25) is U-shaped and is configured to limit displacement of the connecting portion (12) in a transverse direction, while positioning the connecting portion (12) in a vertical direction.

14. The protective case (100) for an electronic device according to claim 1, **characterized in that** the front cover (10) comprises a first flexible layer (13) and a hard layer (14); the snap-connection portion (11) is provided on the hard layer (14), the connecting portion (12) is rotatably connected to the first flexible layer (13), the first flexible layer (13) is arranged on a side of the hard layer (14) facing away from the rear shell (20), and the hard layer (14) is adjacent to the rear shell (20).

15. The protective case (100) for an electronic device according to claim 10, **characterized in that** the front cover (10) further comprises a second flexible layer (15), and the second flexible layer (15) is provided on a side of the hard layer (14) facing away from the first flexible layer (13).
